# EUROPEAN PATENT SPECIFICATION

(11) **EP 2 744 655 B1**
(45) Date of publication and mention of the grant of the patent: **17.04.2019**
(21) Application number: 12769584.9
(22) Date of filing: 16.08.2012
(51) Int. Cl.: B32B 27/08, B32B 27/32, B32B 27/30, B65D 81/26, C08J 7/04, C09K 15/02

(54) **PACKAGING FILM WITH ANTIOXIDANT EFFECTS**
VERPACKUNGSFOLIE MIT ANTIOXIDATIVEN WIRKUNGEN
FILM D'EMBALLAGE À EFFETS ANTIOXYDANTS

(30) Priority: 19.08.2011 CZ 20110515
(43) Date of publication of application: 25.06.2014
(73) Proprietor: Invos, Spol. S.R.O., 68713 Brezolupy (CZ)
(72) Inventor: SLANIK, Antonin, 76363 Halenkovice (CZ); OBR, Tomas, 79601 Prostejov (CZ); VASICEK, Stanislav, 68712 Mistrice (CZ)
(74) Representative: Kreizlova, Dana
(86) International application number: PCT/CZ2012/000082
(87) International publication number: WO 2013/026426

(56) References cited:
- EP-A1- 0 402 217
- EP-A1- 0 546 903
- EP-A2- 0 657 277
- US-A- 6 063 503
- US-A- 6 156 231
- US-A1- 2002 164 444
- US-A1- 2006 011 892
- US-A1- 2009 226 651
- US-A1- 2009 226 997

## Description

### Technical area

This invention concerns packaging film with antioxidant effects, especially for foodstuff packaging.

### State of the art

For the long-term packaging of products that are sensitive to the presence of oxygen and need to be packed in an atmosphere with a lower concentration of oxygen than in the air (21%) - such as poultry, smoked meats and sausages, fatty fish, ham, cheese, pasta, ready meals , bread, dried food - packaging for storage is technically and economically problematic. For meat products, packing into tins is used, which however has its disadvantages - mainly the complex technology needed, the impossibility to visually check the product, disposal of the packaging after use and the rather unfavorable economics of the process.

MAP (modified atmosphere packing) packaging is used as a modern system - packing in a modified atmosphere. The advantage of this packaging is its reduced weight and thus less material to be disposed of. The disadvantage is the need for special packing lines and modified gases. However, oxygen has such quick moving molecules that it is virtually impossible to achieve MAP with a zero concentration of oxygen.

Another system is packing into multi-layered plastic film containing as an additive in one of the polymer layers an oxygen scavenger. This is a compound that scavenges atmospheric oxygen inside the packaging. Examples of scavengers that are used are compounds of alkaline earth metals or iron and its compounds.

The subject of European Patent No. 0884173 is an example of multi-layered film packaging where the middle layer contains as an additive the above-described oxygen scavengers, the upper layer (inner layer of the packaging), permeable to oxygen, is made of polyolefin, and the bottom barrier layer (the outer layer of the packaging) is especially made of polyamide or polyethylene terephthalate.

Similarly designed packing films are also the subject of a series of Japanese patent applications, no. 2008126441, 2008006635, 2002201360, 2000210021 and 2000198164. These are variously modified solutions for more specific packaging applications - for example, in the case of no. 2000210021, special packaging for packing coffee.

In all of the above-described solutions there are active substances - oxygen scavengers mixed as an additive into a compound with the plastic and used as part of the multi-layer structure of the multi-layered packing film, which is manufactured using co-extrusion technology or lamination of individual film layers. The system is composed of the outer film of the packaging, layers containing the active substances and a covering film. The covering film prevents direct contact between the active substances and the packaged product - mainly foodstuffs, although it must not act as an oxygen barrier. Therefore, the composition of the inner and outer layers is arranged such that the inner covering film has greater oxygen permeability than the outer film. This ensures that oxygen flows into the active layer through the covering film of the packaging and not from the external environment. The active substance is mixed into the same polymer as the covering film, that is, into material with greater oxygen permeability.

The disadvantage of this design is, for example, that the layer with the active substance, due to it not being transparent and it covering the whole product, hinders any visual check of the packed product.

US2006011892 discloses a film coated with an oxygen absorbing composition containing iron and with an oxygen-permeable polymer coating on top of the oxygen absorbing composition.

### Principle of the invention

Packing film with antioxidant effects according to the invention greatly contributes to eliminating the above drawbacks of well-known designs. The principle of the invention lies in the fact that this packing film is made up of at least one polymer carrier layer, **based** on a **one-layer** PP film of thickness 0.040 to 0.100 mm, **or on a two-layer film with an A/B structure, with an overall thickness of** 0.040 to 0.100 mm **and a thickness ratio of individual layers of 4:1, where layer A is made up of a PP polymer layer and where layer B is an EVA co-polymer layer,** which **on the side of the packaged product,** on one side **of the said one-layer film, or on the surface of said layer B, respectively,** has a layer of printing paint containing 10 to 30 % by weight of antioxidant additive based on active iron, spread at after drying 1 to 2.5 g/m², covered by a layer of printing paint **permeable to oxygen** containing 15 to 30 % by weight of micronized limestone spread at after drying 0.5 to 2.0 g/m².

An antioxidant additive based on active iron is the preferred oxygen scavenger, made up of iron powder with a surface area of min. 0.5m²/g, or containing in addition one compound from the group of alkaline earth metals, mainly a compound of limestone and/or magnesium.

The layer containing this antioxidant additive based on active iron is preferably a layer of printing, sprayed on using flexography technology, containing the antioxidant additive in a dried coating from 0.30 to 0.50 g/m².

The innovation of this concept lies in the fact that the active substance - the oxygen scavenger - is not part of the structure of the film but is merely contained in the coating (printing paint), and thus certain places on the packaging can be printed on using suitable technology, most frequently flexographic, which is commonly used to print on plastic packing film.

When using oxygen scavengers, it is important to protect the layer containing the active substance. This, according to the invention, is carried out either by laminating the covering film with greater oxygen permeability, or subsequent printing with protective paint. This printing is preferably carried out at the same time as printing with the paint containing the active substance. The advantage of this solution lies in the fact that the position of the active substance print and the covering print can be aligned with the print of the outer side of the packaging (advertising, marketing or instructional print) and the rest of the packaging then stays transparent, thus allowing visual checks of the packaged product.

The advantage of the solution according to the design is the possibility to use printing technology not only to create the layer with the active substance (instead of a multi-layered structure created by co-extrusion or lamination) but also to create the protective layer. The active as well as the protective layer can then be created just in well-defined places on the packaging, which is of great importance due to the marketability of the packaging and the possibility to create a thin protective layer with high oxygen permeability, thus leading to greater effectiveness of the oxygen scavengers.

As a basic film, it is possible to use common packing film, either one- or two-layer, co-extruded or laminated.

### Examples of practical application of the invention

### Example 1

The packing film is made up of a PP polymer carrier layer of thickness 0.050 mm, which on one side has a layer of printing paint containing 20 % by weight of antioxidant additive based on active iron, spread at 7 g/m², after drying 1.4 g/m².

The film is covered with a layer of printing paint containing 15 % of micronized limestone spread at 5 g/m², after drying 0.45 g/m².

### Example 2

The packing film is made up of a polymer carrier layer based on two-layer film of thickness 0.060 mm and composed of PP/EVA with a ratio of thickness of individual layers of 4:1. The surface of the EVA co-polymer layer has a layer of printing paint containing 20 % by weight of antioxidant additive based on active iron spread at 7 g/m², after drying 1.4 g/m².

The film is covered with a layer of printing paint containing 15 % by weight of micronized limestone spread at 5 g/m², after drying 0.45 g/m².

### Example 3

The packing film is made up of a PP polymer carrier layer of thickness 0.050 mm, which on one side has a layer of printing paint containing 20 % by weight of antioxidant additive based on active iron spread at 7 g/m2, after drying 1.4 g/m².

The covering film permeable to oxygen is LDPE film of thickness 0.015 mm.

### Example 4

The packing film is made up of a polymer carrier layer based on two-layer film of thickness 0.060 mm and composed of PP/EVA with a ratio of thickness of individual layers of 4:1. The surface of the EVA co-polymer layer has a layer of printing paint containing 20 % by weight of antioxidant additive based on active iron spread at 7 g/m², after drying 1.4 g/m².

The covering film permeable to oxygen is EVA co-polymer film of thickness 0.015 mm.
surface of the EVA co-polymer layer has a layer of printing paint containing 20 % by weight of antioxidant additive based on active iron spread at 7 g/m2, after drying 1.4 g/m2. The covering film permeable to oxygen is EVA co-polymer film of thickness 0.015 mm.

## Claims

1. Packing film with antioxidant effects, especially for foodstuffs, **characterized by** the fact that it is made up of at least one polymer carrier layer, based on a one-layer PP film of thickness 0.040 to 0.100 mm, or on a two-layer film with an A/B structure, with an overall thickness of 0.040 to 0.100 mm and a thickness ratio of individual layers of 4:1, where layer A is made up of a PP polymer layer and where layer B is an EVA co-polymer layer, which on the side of the packaged product, on one side of the said one-layer film, or on the surface of said layer B, respectively, has a layer of printing paint containing 10 to 30 % by weight of antioxidant additive based on active iron, spread at after drying 1 to 2.5 g/m², covered by a layer of printing paint permeable to oxygen containing 15 to 30 % by weight of micronized limestone spread at after drying 0.5 to 2.0 g/m².

2. The packing film according to claim 1, **characterized by** the fact that the antioxidant additive based on active iron is an oxygen scavenger made up of iron powder with a surface area of at least 0.5 m²/g.

3. The packing film according to claim 2, **characterized by** the fact that the oxygen scavenger, made up of powdered iron, contains in addition at least one compound from the group of alkaline earth metals, mainly a compound of limestone and/or magnesium.

4. The packing film according to claim 1, **characterized by** the fact that the coating containing antioxidant additive based on active iron is a printing layer, applied using flexography technology, and containing antioxidant additive spread at 0.30 to 0.50 g/m² when dry.

## Patentansprüche

1. Verpackungsfolie mit antioxidativen Wirkungen, insbesondere für Lebensmittel, **dadurch gekennzeichnet, dass** sie aus mindestens einer Polymerträgerschicht besteht, die auf einer einschichtigen PP-Folie mit einer Dicke von 0,040 bis 0,100 mm oder an einer zweischichtigen Folie mit einer A/B-Struktur aufgebaut ist, mit einer Gesamtdicke von 0,040 bis 0,100 mm und einem Dickenverhältnis der einzelnen Schichten von 4:1, wo die Schicht A aus einer PP-Polymerschicht besteht und wo die Schicht B eine EVA-Copolymerschicht ist, die auf der Seite des verpackten Produkts, auf einer Seite der genannten einschichtigen Folie, oder auf der Oberfläche der genannten Schicht B, jeweils, eine Druckschicht hat, die 10 bis 30 Gew.-% des auf Aktiveisen basierenden bei der Nachtrocknung zu 1 bis 2,5 g/m² ausgebreiteten Antioxidationsmittelzusatzstoffs enthält, gedeckten mit einer für Sauerstoff durchlässigen Druckschicht, die 15 bis 30 Gew.-% des bei der Nachtrocknung zu 0,5 bis 2,0 g/m² ausgebreiteten mikronisierten Kalksteins enthält.

2. Verpackungsfolie nach dem Anspruch 1, **dadurch gekennzeichnet, dass** der auf Aktiveisen basierende Antioxidationsmittelzusatzstoff ein Sauerstoffabsorber aus Eisenpulver mit einer Oberfläche von mindestens 0,5 m²/g ist.

3. Verpackungsfolie nach dem Anspruch 2, **dadurch gekennzeichnet, dass** der aus Eisenpulver bestehende Sauerstoffabsorber zusätzlich mindestens eine Verbindung aus der Gruppe der Erdalkalimetalle enthält, hauptsächlich eine Verbindung aus Kalkstein und/oder Magnesium.

4. Verpackungsfolie nach dem Anspruch 1, **dadurch gekennzeichnet, dass** die Beschichtung, die einen auf Aktiveisen basierenden Antioxidationsmittelzusatzstoff enthält, eine Druckschicht ist, die mittels Flexographietechnologie aufgebracht wird, und einen Antioxidationsmittelzusatzstoff enthält, der zu 0,30 bis 0,50 g/m² ausgebreitet wird, wenn er trocken ist.

## Revendications

1. Film de conditionnement avec effets anti-oxydants, spécialement destiné aux aliments, **caractérisé par le fait, qu'**il est composé au moins d'une couche porteuse polymère, basée sur un film PP mono-couche d'une épaisseur de 0,040 à 0,100 mm, ou d'un film bi-couche à structure A/B, d'une épaisseur totale de 0,040 à 0,100 mm et avec un rapport de 4:1 entre l'épaisseur des différentes couches, sachant que la couche A est fabriquée en polymère PP et que la couche B est en copolymère EVA, qui, sur le côté du produit emballé, sur un côté du film mono-couche ci-dessus mentionné, ou sur la surface de la couche B présente une couche de peinture contenant de 10 à 30% massiques d'additif anti-oxydant basé sur du fer actif, appliqué à 1 à 2,5 g/m² après le séchage , recouverte par une couche de peinture perméable à l'oxygène contenant de 15 à 30% massiques de calcaire micronisé appliquée à 0,5 à 2,0 g/m² après le séchage.

2. Film de conditionnement selon la revendication 1, **caractérisé par le fait, qu'**il additif antioxydant basé sur le fer actif est un capteur d'oxygène constitué de poudre de fer avec une surface de 0,5 m²/g minimum.

3. Film de conditionnement selon la revendication 2, **caractérisé par le fait, qu'**il le capteur d'oxygène basé sur la poudre de fer contient comme additif au moins un composant du groupe des métaux alcalino-terreux, principalement un composant de calcaire et/ou du magnésium.

4. Film de conditionnement selon la revendication 1, **caractérisé par le fait, qu'**il le traitement de surface contenant l'additif anti-oxydant basé sur le fer actif est une surface à imprimer par flexographie et contenant l'additif anti-oxydant appliqué à 0,30 à 0,50 g/m² après le séchage.
